# EUROPÄISCHE PATENTSCHRIFT

(11) **EP 0 755 497 B1**
(45) Veröffentlichungstag und Bekanntmachung des Hinweises auf die Patenterteilung: **13.01.1999**
(21) Anmeldenummer: 95915736.3
(22) Anmeldetag: 04.05.1995
(51) Int. Cl.: F24J 3/08, E21B 43/04, E21B 36/00, E21B 43/08

(54) **ANLAGE ZUM AUSTAUSCH VON ENERGIE ZWISCHEN ERDREICH UND EINEM ENERGIETAUSCHER**
FACILITY FOR EFFECTING ENERGY EXCHANGE BETWEEN THE GROUND AND AN ENERGY EXCHANGER
INSTALLATION POUR L'ECHANGE D'ENERGIE ENTRE LE SOL ET UN ECHANGEUR D'ENERGIE

(30) Priorität: 06.05.1994 CH 1430/94
(43) Veröffentlichungstag der Anmeldung: 29.01.1997
(73) Patentinhaber: GEOHIL AG, 6331 Hünenberg (CH)
(72) Erfinder: HILDEBRAND, Hans, CH-6340 Baar (CH)
(74) Vertreter: Schmauder, Klaus Dieter
(86) Internationale Anmeldenummer: CH9500100
(87) Internationale Veröffentlichungsnummer: WO9530863

(56) Entgegenhaltungen:
- US-A- 4 112 745

## Beschreibung

Die Erfindung betrifft eine Anlage gemäss Oberbegriff des Anspruches 1.

Anlagen der eingangs genannten Art sind mehrfach bekannt, so beispielsweise aus der EP-PS 0 386 176. Ein solches offenes, das heisst druckloses System, bei dem also die Vorlaufleitung und die Rücklaufleitung eines Erdwärmetauschers kein geschlossenes Rohrleitungssystem bilden, hat sich sehr gut bewährt. Beim Vordringen in grössere Tiefen ergeben sich jedoch grössere Widerstände, die die Geschwindigkeit des Wasserflusses reduzieren.

Aufgabe der Erfindung ist es, eine Anlage der eingangs genannten Art weiter zu verbessern, so dass die Durchlaufgeschwindigkeit des Wassers erhöht wird.

Diese Aufgabe wird gelöst durch die kennzeichnenden Merkmale des Anspruches 1. Dadurch, dass der Innenquerschnitt des unterhalb der Pumpe angeordneten Trennrohres reduziert ist, erhöht sich die thermisch bedingte Steiggeschwindigkeit des wärmeren Vorlaufwassers, wodurch die Leistung der Anlage weiter verbessert wird. Dies ermöglicht insbesondere auch ein Vordringen der Anlage in grössere Tiefen, so dass solche Erdwärmetauscher, deren Wirksamkeit heute auf 250 bis 350 m begrenzt ist, wesentlich tiefer angelegt werden können, beispielsweise 500 bis 800 m und tiefer. Die maximale Tiefe hängt im wesentlichen nur noch vom Bohrgerät ab. Ein weiterer Vorteil ist es, dass die Pumpe nicht bis ans untere Ende des Erdwärmetauschers abgesenkt werden muss, sondern nur über einen Teilabschnitt, wodurch sich wesentliche Materialeinsparungen für Leitungen ergeben und Reparatur- und Servicearbeiten an der Pumpe schneller und einfacher ausgeführt werden können.

Vorteilhafte Ausgestaltungen der Anlage sind in den Ansprüchen 2 bis 10 beschrieben.

Die Wirksamkeit der Anlage lässt sich noch erhöhen, wenn das Trennrohr gemäss Anspruch 2 unterhalb der Pumpe wärmeisolierend ausgebildet ist, so dass eine Wärmeabgabe des Vorlaufwassers an die Umgebung verhindert wird und dadurch die thermische Steiggeschwindigkeit des Vorlaufwassers nicht reduziert wird.

Grundsätzlich können die Rücklaufrohre so ausgestaltet sein, wie dies beispielsweise in der EP-PS 0 386 176 beschrieben ist. Durch die Zirkulation des Rücklaufwassers mit der Umgebung kann die Wärmeübertragung vom umgebenden Erdbereich an das Rücklaufwasser erhöht werden. Je nach geologischen Verhältnissen kann es aber zweckmässig sein, die Rücklaufrohre gemäss Anspruch 3 lediglich im Bereich der Eintrittsöffnungen des Trennrohres mit Durchtrittsöffnungen zu versehen, um das Einschwemmen von Erdreich oder sonstigen Sedimenten zu verhindern. Der Wärmeübergang im Bereich der geschlossenen Rücklaufrohre erfolgt dann durch örtliche Zirkulation des sich an den Rücklaufrohren abkühlenden Umgebungswassers, welches sich im radial weiter aussen liegenden Bereich wieder erwärmt.

Das Eindringen von Sedimenten oder anderen Verunreinigungen in das Trennrohr und damit in ein Vorlaufrohr wird durch eine Ausbildung nach Anspruch 4 erschwert. In geologischen Verhältnissen, bei denen eine grössere Gefahr der Ausschwemmung von Umgebungsmaterial besteht, ist eine Weiterbildung der Anlage nach Anspruch 5 von Vorteil. Dabei kann die Kammer nach Anspruch 6 ausgestaltete sein. Das Eindringen von Sedimenten in die Kammer kann durch die Weiterbildung nach Anspruch 7 weiter reduziert oder gar verhindert werden, wobei dennoch das offene, drucklose System erhalten bleibt.

Insbesondere in dem Falle, wo die Durchtrittsöffnungen der Rücklaufrohre lediglich im Bereich der Eintrittsöffnungen des Trennrohres und insbesondere im Bereich der Schutzkappe angeordnet sind, ist eine Ausgestaltung nach Anspruch 8 von Vorteil, wobei eine Weiterbildung nach Anspruch 9 bevorzugt ist. Die Rücklaufrohre können dann beispielsweise nach Anspruch 10 dimensioniert sein.

Ausführungsbeispiele des Gegenstandes der Erfindung werden nachfolgend anhand der Zeichnungen näher beschrieben, dabei zeigen:
- Figur 1:: eine Anlage in schematischer Darstellung im Vertikalschnitt; und
- Figur 2:: den Grundbereich einer abgewandelten Anlage in grösserem Massstab.

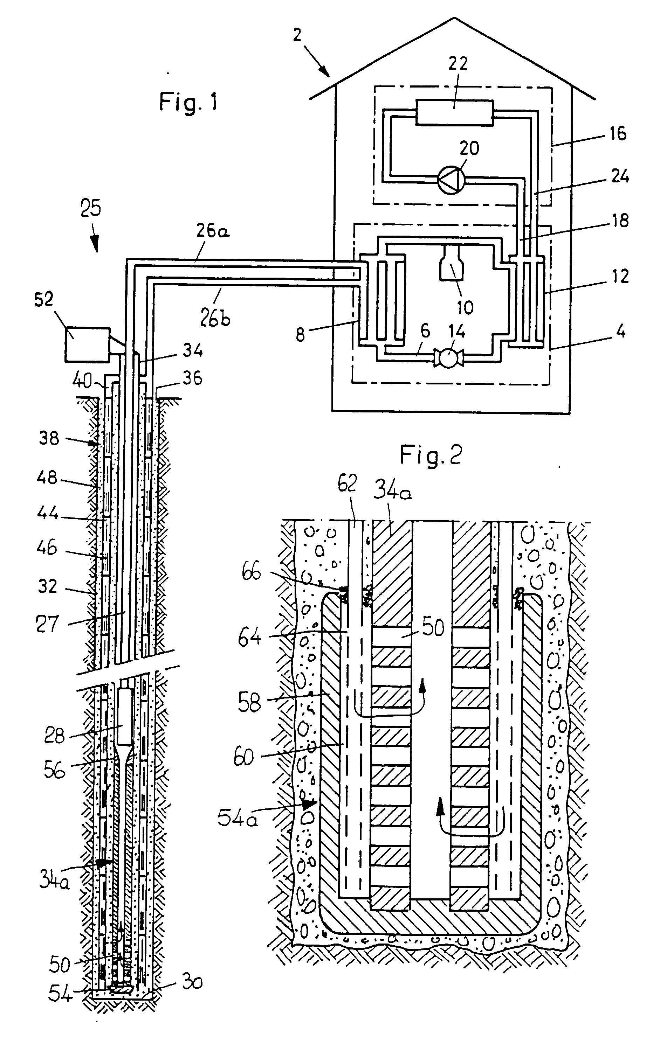

Die Figur 1 zeigt eine Anlage zur Nutzung der Erdwärme, beispielsweise zur Beheizung eines Hauses 2. Hierzu enthält das Haus einen Energietauscher, der als Wärmepumpe 4 ausgebildet ist, die in einem Medienkreislauf 6 einen Verdampfer 8, einen Verdichter 10, einen Verflüssiger 12 und ein Drosselventil 14 enthält. Solche Wärmepumpen 4 sind bekannt.

An dem Verflüssiger 12 sind in bekannter Weise eine Heizungsanlage 16 mit einem Heizungsvorlauf 18, der eine Umwälzpumpe 20 enthält, und mit einem Wärmeverbraucher 22 angeschlossen. Von letzterem stellt ein Heizungsrücklauf 24 die Verbindung zum Verflüssiger 12 wieder her.

Der Verdampfer 8 ist über eine Vorlaufleitung 26a und eine Rücklaufleitung 26b mit einem Erdwärmetauscher 25 verbunden, die ein wärmeisolierendes Vorlaufrohr 27 und eine Pumpe 28 enthält, welche mit Abstand vom Grund 30 des Bohrloches 32 angeordnet sind. Das Vorlaufrohr 27 und die Pumpe 28 sind von einem Trennrohr 34 umgeben, an das sich radial nach aussen bis zur Bohrlochwandung 36 ein Rücklaufbereich 38 anschliesst. In diesem Rücklaufbereich 38 sind mehrere im Umfang verteilte Rücklaufrohre 40 angeordnet, die in der gemeinsamen Rücklaufleitung 26b zusammengefasst sind, welche am Verdampfer 8 angeschlossen ist.

Wie aus Figur 1 hervorgeht, reicht jedes Rücklaufrohr 40 bis annähernd an den Grund 30 des Bohrloches 32 und enthält mehrere über seine Länge verteilte Querverschlüsse 44. Beidseits solcher Querverschlüsse 44 sind Durchtrittsöffnungen 46 angeordnet, die zunächst ein Austreten des Rücklaufwassers in die poröse Füllung 48 ermöglichen, welche die Rücklaufrohre 40 umgibt und den Rücklaufbereich 38 ausfüllt. Die Durchtrittsöffnungen 46 sind beispielsweise Längsschlitze. Das Rücklaufrohr enthält über seine Länge verteilt mehrere Reihen solcher Durchtrittsöffnungen 46.

Die den Rücklaufbereich 38 um die Rücklaufrohre 40 ausfüllende poröse Füllung 48 besteht zweckmässigerweise aus Kies. Der Rücklaufbereich 38 steht im Bereich des Grundes 30 des Bohrloches 32 über Eintrittsöffnungen 50 im Trennrohr 34 mit dem Inneren des Trennrohres 34 in Verbindung. Am oberen Ende des Trennrohres 34 ist eine Spülpumpe 52 angeschlossen, die zur Einleitung von Rückspülwasser in das Trennrohr 34 und durch die Eintrittsöffnungen 50 in den Rücklaufbereich 38 dient, um eine etwaige Verschlammung der porösen Füllung 48 zu beseitigen. Das untere Ende des Trennrohres ist mit einer Schutzkappe 54 verschlossen.

Wie aus Figur 1 hervorgeht, reichen das Vorlaufrohr 27 und die Pumpe 28 nicht bis ans untere Ende des Trennrohres 34 sondern lediglich über eine Teilbereich von beispielsweise 200 m bis 350 m Tiefe. Unterhalb der Pumpe 28 geht das Trennrohr 34 in einen Abschnitt 34a über, der einen geringeren Innenquerschnitt hat als im oberen Bereich. Der Übergang wird durch ein Reduzierstück 56 gebildet. Der Abschnitt 34a des Trennrohres 34 ist überdies wärmeisolierend ausgebildet und weist hierzu vorzugsweise ein an sich bekanntes Thermorohr mit entsprechend grösserer Wandstärke auf. Ein solches Thermorohr besteht beispielsweise aus Kunststoff und hält luftgefüllte Kammern, die den Wärmeübergang reduzieren. Der Abschnitt 34a mit reduziertem Innenquerschnitt kann beispielsweise 200 m bis 800 m und tiefer angeordnet sein

Die Figur 2 zeigt eine weitere Ausbildung des Endbereiches des Erdwärmetauschers 25, bei dem die Schutzkappe 54a eine seitliche Ringwand 58 aufweist, welche den Bereich des unteren Endes des Trennrohres 34a, der mit Eintrittsöffnungen 50 versehen ist, überdeckt. Die Ringwand 58 bildet mit dem Trennrohr 34a eine Kammer 60, in die Rücklaufrohre 62 münden. Die Rücklaufrohre 62 haben kleinen Querschnitt und es ist eine solche Anzahl von Rücklaufrohren 62 vorgesehen, dass der Umfang des Trennrohres 34a mindestens grösstenteils überdeckt ist. Die Rücklaufrohre bestehen vorzugsweise aus gut wärmeleitendem Material, wie beispielsweise Kupfer. Die Rücklaufrohre 62 sind bis zum Bereich der Schutzkappe 54a geschlossen und weisen lediglich im Bereich der Kammer 60 Durchtrittsöffnungen 64 auf, so dass das erwärmte Rücklaufwasser durch die Durchtrittsöffnungen 64 austritt und durch die Eintrittsöffnungen 50 in das Innere des Trennrohres 34a gelangt. Der obere Bereich der Ringkammer 60 ist vorzugsweise mit einem Filter 66 abgeschlossen, das beispielsweise ein Sieb oder ein anderes Mittel sein kann, welches das Eindringen von Sedimenten verhindert, jedoch die Kommunikation zwischen der Kammer 60 und der Umgebung gewährleistet, um das offene System sicherzustellen.

### BEZUGSZEICHENLISTE

- 2: Haus
- 4: Wärmepumpe
- 6: Medienkreislauf
- 8: Verdampfer
- 10: Verdichter
- 12: Verflüssiger
- 14: Drosselventil
- 16: Heizungsanlage
- 18: Heizungsvorlauf
- 20: Umwälzpumpe
- 22: Wärmeverbraucher
- 24: Heizungsrücklauf
- 25: Erdwärmetauscher
- 26a: Vorlaufleitung
- 26b: Rücklaufleitung
- 27: Vorlaufrohr
- 28: Pumpe
- 30: Grund
- 32: Bohrloch
- 34: Trennrohr
- 34a: Trennrohr mit reduziertem Querschnitt
- 36: Bohrlochwandung
- 38: Rücklaufbereich
- 40: Rücklaufrohr
- 44: Querverschluss
- 46: Durchtrittsöffnung
- 48: poröse Füllung
- 50: Eintrittsöffnung
- 52: Spülpumpe
- 54: Schutzkappe
- 54a: Schutzkappe
- 56: Reduzierstück
- 58: Ringwand
- 60: Kammer
- 62: Rücklaufrohr
- 64: Durchtrittsöffnung
- 66: Filter

## Patentansprüche

1. Anlage zum Austausch von Energie zwischen Erdreich und einem Energietauscher, der über eine Vorlaufleitung (26a) und eine Rücklaufleitung (26b) mit einem Erdwärmetauscher (25) verbunden ist, der in einem Bohrloch (32) eine mit einem wärmeisolierenden Vorlaufrohr (27) verbundene Pumpe (28) aufweist, wobei das Vorlaufrohr (27) und die Pumpe (28) im Bohrloch (32) von einem Trennrohr (34,34a) umgeben sind, an das sich radial nach aussen ein Rücklaufbereich (38) für Rücklaufwasser anschliesst, der mit der Rücklaufleitung (26b) in Verbindung stehende Rücklaufrohre (40,62) und eine poröse Füllung (48) enthält und am Grund (30) des Bohrloches (32) über seitliche Eintrittsöffnungen (50) im Trennrohr (34,34a) mit dem Innern des Trennrohres in Verbindung steht, dadurch gekennzeichnet, dass das Trennrohr (34) unterhalb der Pumpe (28) in einen Abschnitt (34a) mit kleinerem Innenquerschnitt übergeht.

2. Anlage nach Anspruch 1, dadurch gekennzeichnet, dass das Trennrohr (34a) unterhalb der Pumpe (28) wärmeisolierend ausgebildet ist.

3. Anlage nach Anspruch 1 oder 2, dadurch gekennzeichnet, dass die Rücklaufrohre (40,62) im wesentlichen bis ans Ende des Trennrohres (34a) reichen und wenigstens im Bereich der seitlichen Eintrittsöffnungen (50) des Trennrohres mit Durchtrittsöffnungen (64) versehen sind.

4. Anlage nach mindestens einem der Ansprüche 1 bis 3, dadurch gekennzeichnet, dass das untere Ende des Trennrohres (34a) mit einer Schutzkappe (54,54a) abgeschlossen ist.

5. Anlage nach Anspruch 4, dadurch gekennzeichnet, dass die Schutzkappe (54a) mindestens den die seitlichen Eintrittsöffnungen (50) aufweisenden Bereich des Trennrohres (34a) übergreift und mit diesem eine nach oben offene Kammer (60) bildet.

6. Anlage nach Anspruch 5, dadurch gekennzeichnet, dass die Kammer (60) als das Trennrohr (34a) umgebende Ringkammer ausgebildet ist.

7. Anlage nach Anspruch 5 oder 6, dadurch gekennzeichnet, dass die Kammer (60) nach oben mit einem Filter (66), vorzugsweise einem Siebfilter, gegen Eindringen von Umgebungsmaterial abgeschlossen ist.

8. Anlage nach mindestens einem der Ansprüche 5 bis 7, dadurch gekennzeichnet, dass der Umfang des Trennrohres (34a) mindestens grösstenteils von Rücklaufrohren (62) umgeben ist.

9. Anlage nach mindestens einem der Ansprüche 1 bis 8, dadurch gekennzeichnet, dass die Rücklaufrohre (62) aus gut wärmeleitendem Material, vorzugsweise Kupfer, bestehen.

10. Anlage nach mindestens einem der Ansprüche 1 bis 9, dadurch gekennzeichnet, dass die Rücklaufrohre (62) einen kleinen Durchmesser von beispielsweise 9 mm und eine kleine Wandstärke von beispielsweise 1 mm aufweisen.

## Claims

1. An installation for the exchange of energy between the soil and an energy exchanger that is connected by means of a supply flow duct (26a) and a return flow duct (26b) with a soil heat exchanger (25) having a pump (28) provided with a thermo-insulated supply flow pipe (27) arranged in a borehole (32) formed in ground, the supply flow pipe (27) and the pump (28) being surrounded within the borehole (32) by a shroud pipe (34,34a), adjacent to which a return flow region (38) for return water is located radially outwardly thereof and comprised of return flow pipes (40,62) connected with the return flow duct (26b) and of a porous filling (48) and communicating at the bottom (30) of the borehole (32) with the interior of the shroud pipe by means of lateral inlet openings (50) provided at the shroud pipe (34,34a), characterized in that beneath the pump (28) the shroud pipe (34) undergoes a transition to a section (34a) with a reduced inner cross-section.

2. An installation according to claim 1, characterized in that beneath the pump (28) the shroud pipe (34a) is formed thermo-insulated.

3. An installation according to claim 1 or 2, characterized in that the return flow pipes (40,62) extend substantially up to the end of the shroud pipe (34a) and are provided with breakthrough openings (64) at least in the region of the lateral inlet openings (50) of the shroud pipe.

4. An installation according to at least one of claims 1 to 3, characterized in that the lower end of the shroud pipe (34a) is closed with a protective cap (54,54a).

5. An installation according to claim 4, characterized in that the protective cap (54a) overlaps at least the region of the shroud pipe (34a) that is provided with the lateral inlet openings (50) and forms, together therewith, an upwardly open chamber (60).

6. An installation according to claim 5, characterized in that the chamber (60) is formed as an annular chamber surrounding the shroud pipe (34a).

7. An installation according to claim 5 or 6, characterized in that the chamber (60) is upwardly closed with a filter (66), preferably a sieve filter, to prevent the penetration of surrounding materials.

8. An installation according to at least one of claims 5 to 7, characterized in that the circumference of the shroud pipe (34a) is surrounded, at least on a major portion thereof, by return flow pipes (62).

9. An installation according to at least one of claims 1 to 8, characterized in that the return flow pipes (62) are formed of material that is a good heat conductor, preferably copper.

10. An installation according to at least one of claims 1 to 9, characterized in that the return flow pipes (62) have a small diameter of e.g. 9 mm and a small wall thickness of e.g. 1 mm.

## Revendications

1. Installation d'échange d'énergie entre le sol et un échangeur d'énergie relié par l'intermédiaire d'une conduite d'amenée (26a) et d'une conduite de retour (26b) à un échangeur de chaleur du sol (25) comportant une pompe (28) pourvue d'un tube d'amenée (27) thermiquement isolé et disposée dans un puits (32) foré dans le sol, le tube d'amenée (27) et la pompe (28) étant entourés dans le puits (32) d'un tube de chemisage (34,34a) auquel est adjacente, radialement vers l'extérieur, une région de retour d'écoulement (38) destinée à la circulation d'eau en retour qui comporte des tubes de retour d'écoulement (40,62) en communication avec la conduite de retour (26b) ainsi qu'un remplissage poreux (48), et communiquant au fond (30) du puits (32) avec l'intérieur du tube de chemisage au moyen d'ouvertures d'amenée latérales (50) pratiquées dans le tube de chemisage (34,34a), caractérisée en ce que le tube de chemisage (34) présente à un niveau situé au-dessous de la pompe (28) une transition vers une portion (34a) de section transversale intérieure réduite.

2. Installation selon la revendication 1, caractérisée en ce qu'à un niveau situé au-dessous de la pompe (28) le tube de chemisage (34a) est thermiquement isolé.

3. Installation selon la revendication 1 ou 2, caractérisée en ce que les tubes de retour d'écoulement (40,62) s'étendent essentiellement jusqu'à l'extrémité du tube de chemisage (34a) et sont pourvus d'ouvertures de passage (64) au moins dans la région des ouvertures d'amenée latérales (50) du tube de chemisage.

4. Installation selon au moins l'une des revendications 1 à 3, caractérisée en ce que l'extrémité inférieure du tube de chemisage (34a) est fermée par un capuchon protecteur (54,54a).

5. Installation selon la revendication 4, caractérisée en ce que le capuchon protecteur (54a) recouvre au moins la région du tube de chemisage (34a) qui est pourvue des ouvertures d'amenée latérales (50) et forme avec celui-ci une chambre (60) ouverte vers le haut.

6. Installation selon la revendication 5, caractérisée en ce que la chambre (60) est réalisée comme chambre annulaire entourant le tube de chemisage (34a).

7. Installation selon la revendication 5 ou 6, caractérisée en ce que la chambre (60) est fermée vers le haut par un filtre (66), de préférence un filtre tamis, destiné à empêcher la pénétration de matériau environnant.

8. Installation selon au moins l'une des revendications 5 à 7, caractérisée en ce que la circonférence du tube de chemisage (34a) est entourée, au moins sur une majeure partie, de tubes de retour d'écoulement (62).

9. Installation selon au moins l'une des revendications 1 à 8, caractérisée en ce que les tubes de retour d'écoulement (62) sont en matériau bon conducteur de la chaleur, de préférence en cuivre.

10. Installation selon au moins l'une des revendications 1 à 9, caractérisée en ce que les tubes de retour d'écoulement (62) présentent un petit diamètre par exemple de 9 mm et une faible épaisseur de paroi par exemple de 1 mm.
